(19) Europäisches Patentamt

European Patent Office

Office européen des brevets

(11) **EP 1 110 596 B1**

(12) **EUROPÄISCHE PATENTSCHRIFT**

(45) Veröffentlichungstag und Bekanntmachung des Hinweises auf die Patenterteilung:
**07.07.2004 Patentblatt 2004/28**

(51) Int Cl.⁷: **B01D 67/00**, B01D 71/44, B01D 69/02

(21) Anmeldenummer: **00126922.4**

(22) Anmeldetag: **08.12.2000**

(54) **Formkörper zur Pyrogenrückhaltung, Verfahren zu ihrer Herstellung und ihre Verwendung**

Shaped body for the retention of pyrogenes, process for its manufacture and use thereof

Articles façonnés pour la rétention des pyrogenes, procédé por les produire et leur utilisation

(84) Benannte Vertragsstaaten:
**AT BE CH CY DE DK ES FI FR GB GR IE IT LI LU MC NL PT SE TR**

(30) Priorität: **23.12.1999 DE 19962275**

(43) Veröffentlichungstag der Anmeldung:
**27.06.2001 Patentblatt 2001/26**

(73) Patentinhaber: **Membrana GmbH**
**42201 Wuppertal (DE)**

(72) Erfinder:
• **Wechs, Friedbert**
**63939 Wörth (DE)**
• **Niklas, Thorsten**
**63868 Grosswallstadt (DE)**
• **Nothdurft, Annekatrin**
**63820 Elsenfeld (DE)**

(74) Vertreter: **Fett, Günter**
**CPW GmbH**
**Kasinostrasse 19 - 21**
**42103 Wuppertal (DE)**

(56) Entgegenhaltungen:
**EP-A- 0 572 274**       **EP-A- 0 636 404**
**WO-A-98/01208**        **DE-A- 4 207 171**

**Beschreibung**

Die Erfindung betrifft Formkörper zur Pyrogenrückhaltung, Verfahren zu ihrer Herstellung und ihre Verwendung.

Bekanntlich sind Pyrogene Substanzen, z.B. Lipopolysaccharid-Komplexe, die in kleinsten Mengen (ca. 0,2 µg/kg Körpergewicht) bei höheren Tieren und beim Menschen nach intravenöser Injektion Fieber bewirken (Pschyrembel, "Klinisches Wörterbuch", 257. Auflage, de Gruyter (1994), Seite 1279). Daher müssen z.B. mit Pyrogenen verunreinigte Infusionsmedien vor ihrer Applikation pyrogenfrei gemacht werden.

Ein weiterer Anwendungsbereich, bei dem die Entfernung von Pyrogenen wichtig ist, ist die Nierendialyse mit sogenannten High-Flux Membranen. Hier muss das Dialysat entweder beispielsweise mittels einer separaten Membraneinheit von Pyrogenen befreit werden um zu verhindern, dass Pyrogene durch die Wand der Dialysemembran rückfiltriert werden und dadurch in das Blut des Dialysepatienten gelangen. Es ist aber auch möglich, als Dialysemembran eine solche Membran einzusetzen, die selbst keine Pyrogene durchlässt, wodurch ebenfalls ein Übergang von Pyrogenen in das Blut vermieden wird. Dabei kann generell der Pyrogenrückhalt durch die Membran über die Trenncharakteristik der Membran bewirkt werden, d.h., dass die Pyrogene aufgrund ihrer Größe zurückgehalten werden. Vielfach erfolgt der Pyrogenrückhalt aufgrund adsorptiver Effekte.

Die EP-A 0 478 842 beschreibt eine Membranfilterschicht aus inerten polymeren Werkstoffen, wie z.B. Polyethylen, Polypropylen, Nylon 6,6, Polycaprolactam, Polyester oder Polyvinylidenfluorid, aus denen sich Membranen mit einer Porenweite von 0,04 bis 0,45 µm zur Pyrogenentfernung herstellen lassen, wobei für das Polymermaterial der Membranfilterschicht bevorzugt ein kationisch oder anionisch modifiziertes Polymer eingesetzt wird, weil sich hiermit die Abscheidungsleistung leichter erreichen lässt. Als kationisch modifiziertes Polymer wird z.B. Nylon 6,6 eingesetzt, dessen Oberfläche mit einem quaternäre Ammoniumgruppen tragenden hitzehärtbaren Polymeren modifiziert wird. Für die anionisch modifizierten Polymere werden Carboxylgruppen als Quelle der negativen Ladung bevorzugt.

Zu den Pyrogenen gehören bekanntlich die Endotoxine, die Zellbruchstücke von abgestorbenen gramnegativen Bakterien darstellen. Die WO 94/17906 beschreibt zur Endotoxinentfernung eine hydrophile, ladungsmodifizierte mikroporöse Membran, die eine vernetzte Struktur aus einem interpenetrierenden Polymernetzwerk aufweist, wobei die Membran Polyethersulfon, polyfunktionelle Glycidylether, polymeres Amin und gegebenenfalls ein Homopolymer aus Vinylpyrrolidon oder ein quaterniertes Copolymer aus Vinylpyrrolidon und mit Methylsulfat quaternisiertem Dimethylaminoethylmethycrylat umfasst.

Die WO 98/01208 beschreibt kationisch geladene Membranen, die zur Entfernung von Endotoxinen geeignet sind. Die Membranen werden gemäß dieser Schrift dadurch hergestellt, dass eine hydrophobe Polymermembran, vorzugsweise aus Poiysulfon, Polyarylsulfon oder Polyethersulfon, mit einem polymeren Benetzungsmittel kontaktiert wird, worauf mindestens ein die Membran kationisch modifizierendes Agens auf die Membran vernetzt wird. In einer weiteren Ausführungsform von WO 98/01208 wird die Membran aus einer Lösung gegossen, die Polyethersulfon, ein Copolymer von Vinylpyrrolidon und einer kationischen Imidazolinium-Verbindung, vorzugsweise Methylvinylimidazoliniummethylsulfat und eine niedermolekulare organische Säure enthält, wobei Gewichtsanteile der Säure an der Gießlösung von 24 bis 34 Gew.% offenbart werden. Daher müssen die Anlagenteile, die mit der Gießlösung in Kontakt kommen, säureresistent sein, wodurch sich die Anlage verteuert.

Somit werden im Stand der Technik zur Pyrogen- bzw. Endotoxinentfemung Strukturen offenbart, die eine Ladung tragen. Zumindest werden ladungstragende Strukturen bevorzugt, um einen über den Siebeffekt hinausgehenden Rückhalteeffekt zu erzielen. Oftmals zeigt sich jedoch, dass die Wirkung derartig modifizierter Membranen nicht ausreicht, d.h., dass die damit erzielte Endotoxinrückhaltung noch nicht hoch genug ist.

Daher besteht ein Bedürfnis nach einem Erzeugnis mit einer verbesserten Rückhaltung von Pyrogenen bzw. Endotoxinen und nach einem Verfahren zur Herstellung dieses Erzeugnisses.

Diese Aufgabe wird zum einen durch einen hydrophil wirkenden Formkörper zur Pyrogenrückhaltung gelöst, der eine synthetische Polymerkomponente und ein Additiv umfasst und dadurch gekennzeichnet ist, dass das Additiv ein keine Ladung tragendes Copolymer aus Vinylpyrrolidon und einer Vinylimidazol-Verbindung ist.

Überraschenderweise zeigt sich, dass der erfindungsgemäße Formkörper aufgrund des erfindungsgemäßen Additivs ein verbessertes Endotoxinrückhaltevermögen besitzt, das größer ist, als das eines ladungsmodifizierten Vergleichsformkörpers.

Es versteht sich von selbst, dass das Additiv für die Pyrogene zugänglich, d.h. auch an der Oberfläche des Formkörpers vorhanden sein muss. Das Additiv muss also entweder in den Formkörper homogen eingearbeitet sein oder sich bevorzugt in erhöhter Konzentration an der Oberfläche des Formkörpers befinden.

Der erfindungsgemäße Formkörper kann porenfrei sein und eignet sich in dieser Ausführungsform etwa als Pulver in entsprechend feiner Körnung z.B. als Adsorptionsmedium für Säulen zur Pyrogenrückhaltung.

Bevorzugt weist der erfindungsgemäße Formkörper jedoch eine poröse Struktur, besonders bevorzugt eine zur Oberfläche offene poröse Struktur und somit zusätzlich zur geometrischen Oberfläche eine Porenoberfläche auf. Derartige Körper besitzen eine große Oberfläche, die sich aus der äußeren geometrischen Oberfläche sowie der inneren Oberfläche der Poren zusammensetzt, wobei das Additiv sowohl auf der geometrischen Oberfläche als auch auf der Porenoberfläche zugänglich ist. Aufgrund seiner Porengröße ist der erfindungsgemäße Formkörper zumindest für einen Teil der Pyrogene durchlässig. Für diesen Teil der Pyrogene bewirkt das erfindungsgemäße an der Porenoberfläche befindliche Additiv die Pyrogenrückhaltung.

Besonders bevorzugt ist der poröse Formkörper als semipermeable Flach-, Schlauch- oder Hohlfaser-Membran ausgebildet, wobei es zum Wissen des Fachmanns gehört, einerseits die Poren groß genug einzustellen, um den Druckaufbau in erträglichen Grenzen zu halten, andererseits die Poren nicht zu groß einzustellen, damit eine ausreichende Porenoberfläche und somit eine ausreichende Beladungskapazität der Membran für die Pyrogene bzw. Endotoxine resultiert.

Grundsätzlich kann das erfindungsgemäß eingesetzte Copolymer jede bekannte Copolymerstruktur aufweisen, also z.B. als Blockcopolymer vorliegen. Bevorzugt liegt es jedoch im Rahmen der vorliegenden Erfindung als statistisches Copolymer vor.

Erfindungsgemäß kann das molare Verhältnis von Vinylimidazol-Verbindung : Vinylpyrrolidon in weiten Grenzen gewählt werden, wobei vorzugsweise ein Verhältnis von 10:90 bis 90:10 mol/mol und besonders bevorzugt von 50:50 mol/mol eingestellt wird.

Erfindungsgemäß kann die Vinylimidazol-Verbindung an einem oder mehreren der Kohlenstoffatome 2, 4 und 5 substituiert sein, wobei vorzugsweise die Vinylimidazol-Verbindung an den Kohlenstoffatomen 2 und/oder 4 und/ oder 5 mit einer $C_1$-$C_5$-Alkylgruppe substituiertes 1-Vinylimidazol ist.

In einer weiteren bevorzugten Ausführungsform der Erfindung ist die Vinylimidazol-Verbindung 1-Vinylimidazol.

Für viele Anwendungen des erfindungsgemäßen Formkörpers genügt die adsorptive Haftung des Additivs an der synthetischen Polymerkomponente, so dass für diese Anwendungen keine die Additiv-Haftung erhöhende Nachbehandlung nötig ist.

Für andere Anwendungen des erfindungsgemäßen Formkörpers, bei denen ohne die Nachbehandlung ein Teil des Additivs z.B. durch Sterilisation, Extraktion oder durch einen sonstigen Nachbehandlungsschritt des Formkörpers, wie z.B. Vorspülen der Membran oder durch die eingesetzten mit Pyrogenen verunreinigten Flüssigkeiten eluiert würde, enthält der erfindungsgemäße Formkörper das Additiv in einer seine Haftung hinreichend erhöhenden Form, wobei das Additiv vorzugsweise vernetzt ist.

Da die pyrogen- bzw. endotoxinhaltigen Lösungen in der Regel wässrig sind, muss die synthetische Polymerkomponente spätestens bei der erfindungsgemäßen Verwendung des Formkörpers hydrophil wirken. Zu diesem Zweck ist grundsätzlich jede Struktur geeignet, die der geometrischen und in Fall eines porösen Formkörpers der Porenoberfläche des Formkörpers Hydrophilie verleiht. So kann die hydrophile Wirkung dadurch erreicht werden, dass der Formkörper mit bekannten Benetzungsmitteln wie z.B. mit Ethanol, Isopropylalkohol oder mit einem Gemisch aus Ethanol und/oder Isopropylalkohol mit Wasser oder nur mit Wasser unter Druck behandelt wird.

Jedoch werden im Rahmen der vorliegenden Erfindung die folgenden Ausführungsformen bevorzugt, die zu einer permanenten Hydrophilie des Formkörpers führen.

In einer dieser bevorzugten Ausführungsformen ist die synthetische Polymerkomponente ein hydrophiles Polymer, wobei das Polymer auch ein ursprünglich hydrophobes Polymer sein kann, das z.B. durch Amidierung, Aminierung, Carboxylierung, Sulfonierung oder Hydroxylierung chemisch hydrophiliert wurde.

Besonders bevorzugt wird als hydrophiles Polymer Polyamid 6, Polyamid 6,6, Polyamid 4,6, Polyethylvinylalkohol oder sulfoniertes Polyethersulfon.

In einer weiteren dieser bevorzugten Ausführungsformen ist die synthetische Polymerkomponente eine Mischung eines hydrophoben Polymers mit einer hydrophilen Modifikation dieses Polymers.

In einer weiteren dieser bevorzugten Ausführungsformen der Erfindung umfasst die synthetische Polymerkomponente ein hydrophobes erstes Polymer und ein hydrophiles zweites Polymer.

In einer besonders bevorzugten Ausführungsform der Erfindung ist das hydrophobe erste Polymer ausgewählt aus der Gruppe der Polysulfone, Polyethersulfone, Polyarylethersulfone, Polyacrylnitrile, Polycarbonate oder Polyolefine, wie z.B. Polyethylen oder Polypropylen.

In einer weiteren besonders bevorzugten Ausführungsform der Erfindung wird als hydrophiles zweites Polymer ein Polymer aus der Gruppe der Polyvinylpyrrolidone, der Polyethylenglykole, der Polyvinylalkohole oder der sulfonierten Polyethersulfone ausgewählt.

Die der Erfindung zugrunde liegende Aufgabe wird ferner durch ein erstes Verfahren zur Herstellung eines ein Additiv und eine synthetische Polymerkomponente umfassenden hydrophil wirkenden Formkörpers zur Pyrogenadsorption durch Herstellung einer eine synthetische Polymerkomponente umfassenden Lösung, Ausformen der Lösung, Unterwerfen der Lösung einer thermisch induzierten oder Nichtlöser induzierten Phasenseparation, wodurch der Formkörper erhalten wird, Waschen, anschließendes Trocknen des Formkörpers sowie gegebenenfalls Behandeln mit einem Benetzungsmittel gelöst, wobei das Verfahren dadurch gekennzeichnet ist, dass als Additiv ein keine Ladung tragendes Copolymer aus Vinylpyrrolidon und einer Vinylimidazol-Verbindung ausgewählt wird und das Additiv entweder der die synthetische Polymerkomponente umfassenden Lösung zugesetzt wird oder bei der Herstellung des Formkörpers in einem der Ausformung der Lösung nachfolgenden Schritt zugesetzt wird.

Der erfindungsgemäße Formkörper kann porenfrei hergestellt werden und eignet sich in dieser Ausführungsform etwa als Pulver in entsprechend feiner Körnung z.B. als Adsorptionsmedium für Säulen zur Pyrogenrückhaltung.

In einer bevorzugten Ausführungsform werden als hydrophil wirkende Formkörper mit dem erfindungsgemäßen Verfahren semipermeable Flach-, Schlauch- oder Hohlfasermembranen mit poröser Struktur hergestellt.

In der Ausführungsform des ersten erfindungsgemäßen Verfahrens, in der das Additiv der die synthetische Polymerkomponente umfassenden Lösung zugesetzt wird, wird das Additiv vorzugsweise in einem auf das Gewicht der Lösung bezogenen Anteil von 0,1 bis 10 Gew.% zugesetzt. Dabei kann das Additiv auch in vernetzter Form zugesetzt werden, z.B. in Gestalt von Luvicross VI oder Luvicross VI-M von BASF.

Erfindungsgemäß kann das Additiv bei der Herstellung des Formkörpers auch in einem der Ausformung der Lösung nachfolgenden Verfahrensschritt, also z.B. im Koagulationsmittel enthalten sein, welches von der ausgeformten Lösung durchlaufen wird.

In einer weiteren bevorzugten Ausführungsform des erfindungsgemäßen ersten Verfahrens wird das Additiv bei der Herstellung des Formkörpers in einem der Ausformung der Lösung nachfolgenden Schritt zugesetzt, wobei der Formkörper eine Hohlfaser-Membran ist und die die synthetische Polymerkomponente enthaltende Lösung über eine Hohlfaser-Düse zu einem Hohlfaden ausgeformt wird und über die Innenbohrung der Hohlfaser-Düse eine Innenflüssigkeit zudosiert wird, die das Additiv enthält.

In einer besonders bevorzugten Ausführungsform der Erfindung enthält die Innenflüssigkeit 0,1 bis 5 Gew.% Additiv.

Der erfindungsgemäße Formkörper wird gemäß einem zweiten erfindungsgemäßen Verfahren dadurch hergestellt, dass man einem Polymerkörper aus einer synthetischen Polymerkomponente als Additiv ein keine Ladung tragendes Copolymer aus Vinylpyrrolidon und einer Vinylimidazol-Verbindung zusetzt. Dabei kann der Polymerkörper nach einem der bekannten Herstellverfahren für Polymerkörper, etwa als Pulver, hergestellt werden, z.B. durch thermisch induzierte oder durch Nichtlöser induzierte Phasenseparation.

In einer bevorzugten Ausführungsform des zweiten erfindungsgemäßen Verfahrens ist der Polymerkörper eine semipermeable Flach-, Hohlfaser- oder Schlauchmembran mit poröser Struktur, die z.B. durch ein Verfahren mit diffusiver oder thermischer Phasenseparation hergestellt wird.

Im zweiten erfindungsgemäßen Verfahren kann das Additiv durch irgendeines der bekannten Applikationsverfahren dem Polymerkörper zugesetzt werden, wie z.B. Imprägnieren, Besprühen mit einer Lösung des Additivs oder Tauchen in eine das Additiv enthaltende Lösung.

In einer bevorzugten Ausführungsform des zweiten erfindungsgemäßen Verfahrens wird das Additiv in einem Bad gelöst, der Polymerkörper durch das Bad geführt und getrocknet, wobei die Lösung Wasser und/oder ein organisches Lösungsmittel sein kann, wie z.B. Methanol, Ethanol oder i-Propanol.

In einer besonders bevorzugten Ausführungsform des zweiten erfindungsgemäßen Verfahrens löst man das Additiv im Bad in einer Konzentration von 0,001 bis 2,0 Gew.%, ganz besonders bevorzugt in einer Konzentration von 0,01 bis 1,0 Gew.%.

Grundsätzlich kann in den erfindungsgemäßen Verfahren das als Additiv zugesetzte Copolymer jede bekannte Copolymerstruktur aufweisen, also z.B. ein Blockcopolymer sein. Bevorzugt wird jedoch im Rahmen der vorliegenden Erfindung ein statistisches Copolymer eingesetzt.

Erfindungsgemäß kann im Copolymeren das molare Verhältnis von Vinylimidazol-Verbindung : Vinylpyrrolidon in weiten Grenzen gewählt werden, wobei vorzugsweise ein Verhältnis von 10:90 bis 90:10 mol/mol und besonders bevorzugt von 50:50 mol/mol eingestellt wird.

Erfindungsgemäß kann die Vinylimidazol-Verbindung an einem oder mehreren der Kohlenstoffatome 2, 4 und 5 substituiert sein, wobei vorzugsweise als Vinylimidazol-Verbindung ein an den Kohlenstoffatomen 2 und/oder 4 und/oder 5 mit einer $C_1$-$C_5$-Alkylgruppe substituiertes 1-Vinylimidazol eingesetzt wird.

In einer weiteren bevorzugten Ausführungsform der Erfindung wird als Vinylimidazol-Verbindung 1-Vinylimidazol eingesetzt.

Damit der erfindungsgemäße Formkörper hydrophil wirkt, ist grundsätzlich jede Verfahrensweise geeignet, die der geometrischen und im Fall eines porösen Formkörpers auch der Porenoberfläche des Formkörpers Hydrophilie verleiht. So kann die hydrophile Wirkung dadurch erreicht werden, dass der Formkörper mit bekannten Benetzungsmitteln wie z.B. mit Ethanol oder Isopropylalkohol oder mit einem Gemisch aus Ethanol und/oder Isopropylalkohol mit Wasser oder mit Wasser unter Druck behandelt wird. Jedoch bevorzugt man die im folgenden beschriebenen erfindungsgemäßen Ausführungsformen, die zu einer permanenten Hydrophilie des Formkörpers führen.

In einer dieser bevorzugten Ausführungsformen ist die synthetische Polymerkomponente ein hydrophiles Polymer, wobei das Polymer auch ein ursprünglich hydrophobes Polymer sein kann, das z.B. durch Amidierung, Aminierung, Carboxylierung, Sulfonierung oder Hydroxylierung chemisch hydrophiliert wurde.

Besonders bevorzugt ist das hydrophile Polymer Polyamid 6, Polyamid 6,6, Polyamid 4,6, Polyethylvinylalkohol oder sulfoniertes Polyethersulfon.

In einer weiteren dieser bevorzugten Ausführungsformen ist die synthetische Polymerkomponente eine Mischung eines hydrophoben Polymers mit einer hydrophilen Modifikation dieses Polymers.

In einer weiteren dieser bevorzugten Ausführungsformen der Erfindung wird als synthetische Polymerkomponente ein hydrophobes erstes Polymer und ein hydrophiles zweites Polymer ausgewählt.

In einer besonders bevorzugten Ausführungsform der Erfindung wird als hydrophobes erstes Polymer ein Polymer aus der Gruppe der Polysulfone, Polyethersulfone, Polyarylethersulfone, Polyacrylnitrile, Polycarbonate oder Polyolefine, wie z.B. Polyethylen oder Polypropylen, ausgewählt.

In einer weiteren besonders bevorzugten Ausführungsform der Erfindung wird als hydrophiles zweites Polymer ein Polyvinylpyrrolidon, ein Polyethylenglykol, ein Polyvinylalkohol oder ein sulfoniertes Polyethersulfon ausgewählt.

Für viele Anwendungen des erfindungsgemäßen Formkörpers genügt die adsorptive Haftung des Additivs an der synthetischen Polymerkomponente, so dass für diese Anwendungen keine die Additiv-Haftung erhöhende Nachbehandlung nötig ist.

Für solche Anwendungen des erfindungsgemäßen Formkörpers, bei denen ohne eine Nachbehandlung des Additivs ein Teil des Additivs z.B. durch Sterilisation, Extraktion oder durch einen sonstigen Nachbehandlungsschritt wie z.B. Vorspülen der Membran oder durch die eingesetzten mit Pyrogenen verunreinigten Flüssigkeiten eluiert würde, wird die Haftung zwischen Additiv und Formkörper durch eine Nachbehandlung hinreichend erhöht, wobei eine Vernetzung des Additivs bevorzugt wird. Dabei können alle bekannten Verfahren zur Vernetzung von Copolymeren aus Vinylpyrrolidon und einer Vinylimidazol-Verbindung eingesetzt werden, wie z.B. energiereiche Strahlung, wie etwa χ-Strahlung oder UV-Strahlung mit oder ohne UV-Initiator oder thermische Verfahren mit einem Peroxid-Initiator.

Im ersten erfindungsgemäßen Verfahren wird das Additiv bevorzugt zusammen mit einem thermischen oder mit einem UV-Initiator dem Koagulationsmittel zugesetzt. Bei der Herstellung von Hohlfasermembranen wird das Additiv vorzugsweise zusammen mit einem thermischen oder UV-Initiator der Innenflüssigkeit zugesetzt und in einem der Koagulation nachgeschalteten Verfahrensschritt, z.B. während des Trocknens, das Additiv thermisch oder photochemisch vernetzt.

Im zweiten erfindungsgemäßen Verfahren wird vorzugsweise das Additiv zusammen mit einem UV-Initiator in einem Bad vorgelegt, der Polymerkörper durch das Bad geführt und nach dem Verlassen des Bades der Bestrahlung mit einer UV-Lampe ausgesetzt und getrocknet. Dabei kann der Formkörper nach dem Verlassen des Bades und vor der Bestrahlung vorgetrocknet werden.

Während die im Stand der Technik zur Verbesserung des Pyrogenrückhalts eingesetzten Additive stets einen Formkörper ergeben, der Ladungen trägt, führt das erfindungsgemäße Additiv zu Formkörpern, die keine Ladungen tragen. Es muss als überraschend angesehen werden, dass die erfindungsgemäßen Formkörper bzw. die nach den erfindungsgemäßen Verfahren hergestellten Formkörper im Vergleich zu Formkörpern ohne dieses Additiv eine deutlich verbesserte Pyrogenrückhaltung aufweisen, so dass damit behandelte ursprünglich mit Pyrogenen kontaminierte Flüssigkeiten nach der Behandlung mit den erfindungsgemäßen Formkörpern eine Pyrogenkonzentration aufweisen, die unterhalb der Nachweisgrenze üblicherweise verwendeter Testverfahren liegt.

Ferner ist es überraschend, dass die erfindungsgemäßen Formkörper bzw. die gemäß den erfindungsgemäßen Verfahren hergestellten Formkörper mit dem keine Ladung tragenden Vinylpyrrolidon/Vinylimidazol-Copolymer als Additiv sogar eine deutlich höhere Pyrogenrückhaltung aufweisen als Formkörper nach dem Stand der Technik, die eine Ladung tragen, wie z.B. Formkörper mit dem eine Ladung tragenden Copolymeren aus Vinylpyrrolidon und Methylvinylimidazoliniummethylsulfat.

Daher sind die erfindungsgemäßen Formkörper zur Rückhaltung von Pyrogenen und insbesondere von Endotoxinen mit besonderem Vorteil verwendbar.

Zu den Pyrogenen zählen, wie bereits ausgeführt, bekanntlich die Endotoxine. In den nachfolgenden Beispielen wird das Pyrogenrückhaltevermögen am Beispiel des Endotoxin-Rückhaltevermögens bestimmt, wobei Hohlfaser- und Flachmembranen getestet werden. Dazu werden endotoxinhaltige Testlösungen unter definierten Bedingungen, die im folgenden noch näher beschrieben werden, durch die zu testenden Membranen filtriert und die Endotoxin-Konzentrationen in den Filtraten im Vergleich zu denen in der Testlösung gemessen. Filtratseitig werden ausschließlich sterile, pyrogenfreie Materialien verwendet. Das Entpyrogenisieren/Sterilisieren der verwendeten Edelstahlfiltrationsgeräte und der Probengefäße aus Glas erfolgt durch mindestens 3-stündiges Erhitzen auf 180°C. Die Endotoxin-Konzentration in den Filtraten und in den Testlösungen wird mit dem Gel-clot-LAL-Test (Pyrogent, Fa. BioWhittaker) bestimmt, der entsprechend der Arbeitsvorschrift des Herstellers durchgeführt wird, allerdings mit jeweils auf die Hälfte reduzierten Volumina (50μl) an Probe bzw. Probeverdünnung und LAL-Reagenz, wobei die Endotoxin-Konzentration in Endotoxin-Units pro ml angegeben und im folgenden als EU/ml abgekürzt wird. Die Nachweisgrenze des Test-Kits liegt bei 0,06 EU/ml. Bis zur Messung werden die Proben in entpyrogenisierten Borsilikatröhrchen bei 4-8°C maximal für 48 h gelagert. Länger gelagerte Proben werden unterhalb von -20°C gelagert.

Zur Bestimmung des Endotoxinrückhaltevermögens von Hohlfasermembranen werden je 50 Kapillaren der zu testenden Membranen in Testmodule mit einer freien Membranlänge von ca. 14 cm eingebaut, so dass eine effektive Membranfläche (innen) von ca. 45 cm$^2$ resultiert. Die Testlösung enthält eine Endotoxinkonzentration von Lipopolysaccharid aus E. coli 055:B5 (Fa. List) im Bereich von 60 - 240 EU/ml in isotoner NaCl-Lösung (Fa. B. Braun Melsungen) mit Zusatz von 1,5 mM CaCl$_2$ und 0,75 mM MgCl$_2$ (teilweise auch in isotoner NaCl-Lösung ohne CaCl$_2$ und MgCl$_2$). Die Testlösung wird mit einer Schlauchpumpe dead-end von Intrakapillarseite nach Extrakapillarseite filtriert, wobei die Filtrationsrate so eingestellt wird, dass der mit dem für die jeweilige Membran gemessenen Transmembranfluß errechnete Druckaufbau während der Filtration in der Größenordnung von 300 mbar liegt. Die Filtration erfolgte 180 Minuten lang mit Probennahmen nach 30, 60, 120 und 180 Minuten. Das Endotoxinrückhaltevermögen wird durch den Vergleich der Endotoxinkonzentration in der Testlösung mit der Endotoxinkonzentration im Permeat bestimmt.

Zur Bestimmung des Endotoxinrückhaltevermögens von Flachmembranen werden Membranscheiben mit 47 mm Durchmesser ausgestanzt und in entpyrogenisierte Edelstahl-Filtrationsgeräte (Fa. Sartorius; effektive Membran-fläche 13 cm$^2$) eingebaut. Testlösungen mit Endotoxin-Konzentrationen von Lipopolysaccharid aus E. Coli 055:B5 (Fa. List) zwischen 0,3 und 600 EU/ml werden mit Wasser (Aqua ad iniect., Fa. Braun Melsungen) oder mit isotoner Na-Cl-Lösung (Fa. Braun Melsungen) angesetzt und in einem 51-Edelstahlbehälter vorgelegt, dessen Ausgang über einen PVC-Schlauch mit dem Eingang des Filterhalters verbunden wird. Durch Anlegen von 1,6 bis 2 bar an den Druckbehälter werden jeweils etwa 100 ml Lösung innerhalb von 9 bis 12 Sekunden durch die Membran filtriert und die Filtrate in entpyrogenisierten Messzylindern aufgefangen. Werden während eines Experiments verschieden konzentrierte Endotoxin-Testlösungen eingesetzt, werden diese beginnend mit der kleinsten Endotoxin-Konzentration durch den gleichen Filter filtriert. Das Endotoxinrückhaltevermögen wird durch den Vergleich der Endotoxinkonzentration in der Testlösung mit der Endotoxinkonzentration im Filtrat bestimmt.

Der Transmembranfluss TMF wurde gemäß

$$TMF = \Delta V/(\Delta t \cdot A \cdot p) \ [ml/min \cdot cm^2 \cdot bar]$$

mit destilliertem Wasser bei Raumtemperatur gemessen.

Die Messungen der Ultrafiltrationsrate und des Siebkoeffizienten erfolgte gemäß den in EP-A 96 915 007 beschriebenen Methoden. Die Messung der maximalen Porengröße erfolgte mit der in EP-B 0 361 085 beschriebenen Blaspunktmethode.

Die Erfindung wird in den folgenden Beispielen näher erläutert, wobei die Filtrationen und Endotoxin-Bestimmungen gemäß den eben beschriebenen Methoden durchgeführt wurden, sofern nichts anderes erwähnt wird.

**Beispiel 1**

**Additiv in Membranrezeptur für eine Hohlfaser-Ultrafiltrationsmembran**

In einem 60 °C warmen Lösungsmittelgemisch aus 42,5 Teilen Caprolactam, 42,5 Teilen Butyrolacton und 5 Teilen Glycerin wurde zuerst das Additiv Vinylpyrrolidon/Vinylimidazol-Copolymer (Luvitec VPI 55 K18 P von BASF), dann Polyvinylpyrrolidon (PVP K30 von ISP) und schließlich Polyethersulfon (Ultrason 6020 von BASF) portionsweise eingerührt, bis ein homogenes Gemisch entstand. Zur Bildung einer Lösung wurde die Temperatur des Gemisches auf 100 °C erhöht und ca. 8 Stunden intensiv gerührt. Die entstandene Lösung aus 19.00 Gew.% Polyethersulfon, 13,67 Gew.% Polyvinylpyrrolidon, 0,38 Gew.% Vinylpyrrolidon/Vinylimidazol-Copolymer als 100 %iger Feststoff, 3,35 Gew.% Glycerin, 31,80 Gew.% Caprolactam und 31,80 Gew.% Butyrolacton wurde auf ca. 60 °C abgekühlt und entgast. Die 60 °C warme Lösung wurde unter Verwendung einer Hohlfadendüse mit einer Bohrung von 400 μm und einer Düsennadel mit 170 μm Bohrung (Wanddicke ca. 60 μm) bei einer Düsentemperatur von 62 °C mit einer Spinngeschwindigkeit von 80 m/min zu einer Kapillare ausgeformt, wobei zur Lumenausformung eine Innenfüllung aus 41 Teilen Caprolactam, 41 Teilen Glycerin und 18 Teilen Wasser verwendet wurde. Die Kapillare wurde durch einen Klimakanal in das aus vollentsalztem Wasser bestehende 65 °C warme Fällbad geleitet. Die Kapillarmembran wurde mit ca. 70 °C warmem Wasser vorgewaschen. Dann wurden die Porenbildner mit ca. 80 °C warmem Wasser entfernt und die Kapillarmembran mit ca. 80 °C heißer Luft getrocknet. Es resultierte eine Hohlfasermembran mit einem Lumen von ca. 200 μm und einer Wanddicke von 30 μm. Die asymmetrische Membran mit innenliegender Trennschicht hatte einen mit Wasser von innen nach außen gemessenen Transmembranfluß von ca. 0,37 ml/(cm$^2$·min·bar), eine Ultra-filtrationsrate (UFR) für wässrige Albuminlösung von 42 ml/(m$^2$·h·mmHg), einen Siebkoeffizienten (SK) für Albumin von 0,03 und einen SK für Cytochrom C von 0,77.

Im Endotoxinrückhaltetest zeigte die eben beschriebene Hohlfasermembran bei einer im Lumen beaufschlagten Endotoxin-Konzentration von 60 EU/ml (Lipopolysaccharid aus E. Coli 055:B5 in isotoner NaCl-Lösung mit Zusatz von 1,5 mM CaCl$_2$ und 0,75 mM MgCl$_2$) nach 30, 60, 120 und 180 Minuten im Permeat < 0,06, 0,06, 0,24 und 0,24 EU/ml, während eine ohne Additiv aber ansonsten in ähnlicher Weise hergestellte Hohlfasermembran unter ähnlichen Versuchsbedingungen kaum eine Endotoxinrückhaltung zeigte.

**Beispiel 2**

**Additiv in Membranrezeptur für eine mikroporöse Flachmembran**

In einem beheizbaren Kessel wurden in der in Beispiel 1 beschriebenen Weise eine 17 Gew.%ige Polyethersulfon-Lösung hergestellt, wobei 5100 g Polyethersulfon (Ultrason 6020 von BASF), 3672 g Polyvinylpyrrolidon (PVP K30 von ISP), 1061,4 g Glycerin, 10083,3 g Caprolactam, 10083,3 g Butyrolacton und 255 g Vinylpyrrolidon/Vinylimidazol-Copolymer Additiv (Luvitec VPI 55 K18P von BASF) als 100%iges Feststoffpulver eingewogen wurden. Die auf 50 °C temperierte Lösung wurde mit einem Gießkasten auf eine auf 45 °C temperierte Gießwalze aufgestrichen, die sich mit 2 m/min bewegte, und durch eine Klimazone in ein auf 45 °C temperiertes Fällbad aus vollentsalztem Wasser geführt. Die solcherweise vorfixierte Membran wurde von der Gießwalze abgezogen, in einem Waschbad mit ca. 80°C warmem Wasser extrahiert und mit einem Trommeltrockner getrocknet. Die resultierende Flachmembran hatte eine maximale Porengröße von 0,50 µm und einen Transmembranfluß von ca. 14,5 ml/(cm$^2$•min•bar).
Der Endotoxinrückhaltetest wurde durch Filtration mittels Schlauchpumpe durch 3 cm$^2$ Membranfläche in Polycarbonatfilterhaltern mit einer Filtrationsrate von 0,07 ml•min$^{-1}$•cm$^{-2}$ unter Verwendung von Lipopolysaccharid aus Ps. aeruginosa als Testendotoxin in isotoner Kochsalzlösung durchgeführt. Im Endotoxinrückhaltetest zeigte diese Flachmembran bei einer beaufschlagten Endotoxin-Konzentration von 10 EU/ml im Filtrat eine Endotoxin-Konzentration von 0,12 EU/ml, während eine ohne das Additiv aber ansonsten in ähnlicher Weise hergestellte Membran mit einem TMF von ca. 42 ml/(cm$^2$•min•bar) bei der gleichen beaufschlagten Endotoxin-Konzentration von 10 EU/ml im Filtrat eine Endotoxin-Konzentration von 6 EU/ml, d.h. kaum eine Endotoxinrückhaltung zeigte.

**Beispiel 3**

**Additiv in Innenfüllung bei der Herstellung einer Hohlfaser-Ultrafiltrationsmembran**

Wie im Beispiel 1 aber ohne das Vinylpyrrolidon/Vinylimidazol-Additiv wurde eine Spinnlösung aus 19,00 Gew.% Polyethersulfon (Ultrason 6020 von BASF), 13,67 Gew.% Polyvinylpyrrolidon (PVP K30 von ISP), 3,37 Gew. % Glycerin, 31,98 Gew.% Caprolactam und 31,98 Gew.% Butyrolacton hergestellt. Die Ausformung zur Kapillarmembran erfolgte wie im Beispiel 1, jedoch mit dem Unterschied, dass das Additiv VinylpyrrolidonNinylimidazol-Copolymer (Luvitec VPI 55 K72W von BASF; 30 Gew.%ige Lösung in Wasser) zur Innenfüllung zugegeben wurde, wobei der auf den Wasseranteil der Innenfüllung bezogene Additiv-Anteil 2 Gew.% und der auf die Gesamtinnenfüllung bezogene Additiv-Anteil ca. 0,36 Gew.% betrug. Die Fällbadtemperatur betrug 74 °C. Es resultierte eine Hohlfasermembran mit einem Lumen von 215 µm und einer Wanddicke von 40 µm. Die asymmetrische Membran mit innenliegender Trennschicht hatte einen Transmembranfluß von ca. 0,39 ml/(cm$^2$•min•bar), eine UFR für Albumin von 55 ml/(m$^2$•h•mmHg), einen SK für Albumin von 0,12 und einen SK für Cytochrom C von 0,88.
Im Endotoxinrückhaltetest zeigte die eben beschriebene Hohlfasermembran bei einer im Lumen vorgegebenen Endotoxin-Konzentration von 60 EU/ml (Lipopolysaccharid aus E. coli 055:B5 in isotoner NaCl-Lösung mit Zusatz von 1,5 mM CaCl$_2$ und 0,75 mM MgCl$_2$) im Permeat nach 30, 60, 120 und 180 Minuten < 0,06, < 0,06, < 0,06 und < 0,06 EU/ml, also selbst nach 180 Minuten Werte unterhalb der Nachweisgrenze des LAL-Tests, während eine ohne das Additiv aber ansonsten in ähnlicher Weise hergestellte Hohlfasermembran unter ähnlichen Versuchsbedingungen kaum eine Endotoxinrückhaltung zeigte.

**Beispiel 4**

**Applikation des Additivs auf eine bereits hergestellte Mikrofiltrations-Flachmembran**

Eine Polyethersulfon-Mikrofiltrations-Flachmembran mit einem Transmembranfluß von 45 ml/(cm$^2$•min•bar) und einer mit der Blaspunkt-Methode gemessenen maximalen Porengröße von 0,50 µm wurde mit 2 m/min über eine Walze durch eine Tauchwanne geführt, worin sich eine wässrige Lösung des Additivs Vinylpyrrolidon/Vinylimidazol-Copolymer (Luvitec VPI 55 K72W von BASF, 30 %ige wässrige Lösung) befand, die 0,1 Gew.% an Additiv-Festsubstanz enthielt, und anschließend über 7 Walzen getrocknet.
Zum Test des Endotoxinrückhalts wurden nacheinander mit Wasser angesetzte Endotoxinlösungen mit Konzentrationen von 0,3 EU/ml, 3 EU/ml, 12 EU/ml und 240 EU/ml durch die Membran filtriert, wobei in der folgenden Tabelle 1 die Endotoxin-Konzentrationen im Filtrat der gleichen Membran ohne und mit Additiv aufgeführt sind.

Tabelle 1:

| Endotoxinrückhaltevermögen einer Flachmembran ohne und mit Additiv | | |
|---|---|---|
| Beaufschlagte Endotoxin-Konzentration (EU/ml) | Endotoxin-Konzentration im Filtrat der Membran ohne Additiv (EU/ml) | Endotoxin-Konzentration im Filtrat der Membran mit Additiv (EU/ml) |
| 0,3 | < 0,06 | < 0,06 |
| 3 | 0,6 | < 0,06 |
| 12 | 12 | < 0,06 |
| 240 | 120 | 0,06 |

Während die Membran ohne Additiv bereits bei einer beaufschlagten Endotoxin-Konzentration von 3 EU/ml Endotoxine in einer Konzentration von 0,6 EU/ml durchlässt, zeigt die das Additiv enthaltende Membran selbst bei einer beaufschlagten Endotoxinkonzentration von 12 EU/ml eine Endotoxinkonzentration im Filtrat von < 0,06 EU/ml und somit einen Wert, der unterhalb der Nachweisgrenze des eingangs bezeichneten Gel-clot-LAL-Tests liegt. Erst bei einer beaufschlagten Endotoxin-Konzentration von 240 EU/ml lässt die das Additiv enthaltende Membran 0,06 EU/ml durch. Bei dieser beaufschlagten Endotoxin-Konzentration lässt jedoch die Membran ohne Additiv die 2000 - fache Menge an Endotoxinen durch.

Durch den Additiv-Auftrag verändern sich die Transportdaten sowie die maximale Porengröße kaum. Für eine an Restextrakt arme Membran, bzw. für lange Standzeiten, muss das Additiv auf der Membran nachvemetzt werden.

**Beispiel 4a**

**Applikation des Additivs auf eine bereits hergestellte Mikrofiltrations-Flachmembran und Vernetzung des Additivs**

Die gleiche Mikrofiltrationsmembran wie in Beispiel 4 wurde mit einer wässrigen Lösung getränkt, die 0,2 Gew.% des Additivs Vinylpyrrolidon/Vinylimidazol-Copolymer (Luvitec VPI 55 K72W von BASF, 30 %ige wässrige Lösung) und bezogen auf das Additiv 3 Gew.% des UV-Initiators 4,4'-Diazidostilben-2,2'-Disulfonsäuredinatriumsalz•$4H_2O$ enthält. Danach wurde die Membran auf ein Filterpapier gelegt und die anhaftenden Lösungsreste abgetupft. Anschließend ließ man ca. 50 Gew.% des Lösungsmittels Wasser an der Luft verdampfen und bestrahlte die noch feuchte Membran etwa 12 Sekunden lang mit dem UV-Belichtungsgerät DYNACHEM SC 24 mit einer Leistung von 10 kW und einer Wellenlänge von ca. 300 bis 400 nm, wobei sich die Membranoberfläche leicht beige färbte. Schließlich wurde die Membran analog dem Japanese Standard Test 1 h lang in 70 °C warmem Wasser extrahiert und bei 90 °C getrocknet.

Zum Test des Endotoxinrückhalts wurde die Membran mit verschiedenen in Wasser angesetzten Endotoxin-Konzentrationen beaufschlagt, wobei in der folgenden Tabelle 2 die Endotoxin-Konzentrationen im Filtrat der gleichen Membran ohne und mit Additiv aufgeführt sind.

Tabelle 2:

| Endotoxinrückhaltevermögen einer Flachmembran ohne und mit vernetztem Additiv | | |
|---|---|---|
| Beaufschlagte Endotoxin-Konzentration EU/ml | Endotoxin-Konzentration im Filtrat der Membran ohne Additiv EU/ml | Endotoxin-Konzentration im Filtrat der Membran mit vernetztem Additiv EU/ml |
| 0,3 | <0,06 | |
| 3 | 0,6 | |
| 12 | | < 0,06* |
| 24 | 12 | |
| 48 | | < 0,06** |

* 2-fach gemessen;

** 3-fach gemessen;

Tabelle 2: (fortgesetzt)

| Endotoxinrückhaltevermögen einer Flachmembran ohne und mit vernetztem Additiv | | |
|---|---|---|
| Beaufschlagte Endotoxin-Konzentration EU/ml | Endotoxin-Konzentration im Filtrat der Membran ohne Additiv EU/ml | Endotoxin-Konzentration im Filtrat der Membran mit vernetztem Additiv EU/ml |
| 120 | | < 0,06* |
| 240 | 120 | |
| 480 | | 2x < 0,06 / 1x 0,06 |

* 2-fach gemessen;

Wie aus Tabelle 2 ersichtlich, zeigt die das vernetzte Additiv enthaltende Membran selbst bei einer beaufschlagten Endotoxin-Konzentration von 480 EU/ml im Filtrat eine Endotoxin-Konzentration von < 0,06 EU/ml bzw. von 0,06 EU/ml und somit einen Wert unterhalb bzw. an der Nachweisgrenze des eingangs bezeichneten Gel-clot-LAL-Tests, während die Membran ohne Additiv bereits bei einer beaufschlagten Endotoxin-Konzentration von 3 EU/ml messbar Endotoxine durchlässt.

In mit isotoner Kochsalzlösung angesetzten Endotoxinlösungen zeigte die das vernetzte Additiv enthaltende Membran bei einer beaufschlagten Endotoxin-Konzentration von 6 EU/ml im Filtrat einen Wert von < 0,06 EU/ml. Erst bei einer beaufschlagten Endotoxin-Konzentration von 48 - 60 EU/ml beginnt die das vernetzte Additiv enthaltende Membran für Endotoxine durchlässig zu werden. Jedoch beträgt bei einer beaufschlagten Endotoxin-Konzentration von 480 - 600 EU/ml die Endotoxin-Konzentration im Filtrat nur zwischen 0,6 und 1,2 EU/ml.

**Beispiel 5**

**Applikation eines Vinylpyrrolidon/Vinylimidazol-Copolymer Additivs auf eine bereits hergestellte Mikrofiltrationsflachmembran**

Die wie in Beispiel 4 hergestellte Membran wurde mit einer Lösung getränkt, die 0,2 Gew.% an Vinylpyrrolidon/Vinylimidazol-Copolymer als Additiv enthielt (Luvitec VPI 55 K 72W von BASF), wobei das Additiv Vinylpyrrolidon und Vinylimidazol in einem molaren Verhältnis von 50:50 mol/mol enthielt. Die Membran wurde abtropfen gelassen und 30 Minuten bei 90 °C getrocknet.

**Applikation eines nicht erfindungsgemäßen**

**Vinylpyrrolidon/3-Methyl-1-Vinylimidazoliniummethylsulfat-Copolymer Additivs auf eine bereits hergestellte Mikrofiltrationsflachmembran**

Die wie in Beispiel 4 hergestellte Membran wurde mit einer Lösung getränkt, die 0,33 Gew.% an Vinylpyrrolidon/ 3-Methyl-1-Vinylimidazoliniummethylsulfat-Copolymer als Additiv enthielt (Luvitec Quat 73 W von BASF), wobei das Additiv Vinylpyrrolidon und 3-Methyl-1-Vinylimidazoliniummethylsulfat in einem molaren Verhältnis von 70:30 mol/mol enthielt. Die Membran wurde abtropfen gelassen und 30 Minuten bei 90 °C getrocknet.

Die Ergebnisse des Endotoxinrückhaltetests sind in Tabelle 3 dargestellt.

Tabelle 3:

| Endotoxinrückhaltetest in mit isotoner NaCl-Lösung angesetzten Testlösungen | | |
|---|---|---|
| Beaufschlagte Endotoxin-Konzentration EU/ml | Endotoxin-Konzentration im Filtrat der Membran mit dem Additiv Vinylpyrrolidon/ Vinylimidazol-Copolymer EU/ml | Endotoxin-Konzentration im Filtrat der Membran mit dem Additiv Vinylpyrrolidon/3-Methyl-1-Vinylimidazolinium methylsulfat-Copolymer EU/ml |
| 6 | 0,12 - 0,3 | 0,48 - 0,6 |
| 30 - 48 | 0,6 | 6 |

Tabelle 3:   (fortgesetzt)

| Endotoxinrückhaltetest in mit isotoner NaCl-Lösung angesetzten Testlösungen | | |
|---|---|---|
| Beaufschlagte Endotoxin-Konzentration EU/ml | Endotoxin-Konzentration im Filtrat der Membran mit dem Additiv Vinylpyrrolidon/ Vinylimidazol-Copolymer EU/ml | Endotoxin-Konzentration im Filtrat der Membran mit dem Additiv Vinylpyrrolidon/3-Methyl-1-Vinylimidazolinium methylsulfat-Copolymer EU/ml |
| 480 | 1,2 - 3 | 30 |

Wie aus Tabelle 3 ersichtlich, zeigte die mit dem erfindungsgemäßen Vinylpyrrolidon/Vinylimidazol-Copolymer als Additiv behandelte Membran ein wesentlich besseres Endotoxinrückhaltevermögen als die Membran, die mit dem nicht erfindungsgemäßen Additiv Vinylpyrrolidon/3-Methyl-1-Vinylimidazoliniummethylsulfat behandelte wurde, dessen Struktur sich vom erfindungsgemäßen Additiv durch die Quaternierung des Stickstoffs in der 3-Position mit Methylsulfat unterscheidet, so dass das nicht erfindungsgemäße Additiv eine positive Ladung am Stickstoff trägt.

**Beispiel 6**

Ein Spinnlösung, die wie in Beispiel 1 jedoch ohne das Additiv Vinylpyrrolidon/Vinylimidazol-Copolymer hergestellt wurde, wurde bei einer Temperatur von 60 °C unter Verwendung der Hohlfaserdüse von Beispiel 1 bei einer Düsentemperatur von 71 °C zu Kapillaren a), b) und c) ausgeformt und wie in Beispiel 1 beschrieben durch einen Klimakanal und durch ein wässriges Fällbad geführt, wobei jeweils Hohlfasermembranen mit einem Lumen von 200 µm und einer Wanddicke von 40 µm entstanden.
Bei der Herstellung der Kapillare a) wurde zur Lumenausbildung eine Innenfüllung ohne Additiv verwendet. Zur Herstellung der Kapillare b) wurde zur Lumenausbildung eine Innenfüllung verwendet, die 2 Gew.% des Vinylpyrrolidon/Vinylimidazol-Copolymers als Additiv enthielt. Zur Herstellung der Kapillare c) wurde zur Lumenausfüllung eine Innenfüllung verwendet, die 2 Gew.% des Vinylpyrrolidon/3-Methyl-1-Vinylimidazoliniummethylsulfat-Copolymers als Additiv enthielt.
Nach Waschen und Trocknen wurden für den Transmembranfluss bei Kapillare a) 0,14, bei Kapillare b) 0,15 und bei Kapillare c) 0,11 ml/min•cm$^2$•bar gemessen.
Die mit dem erfindungsgemäßen Vinylpyrrolidon/Vinylimidazol-Copolymer Additiv behandelten Kapillaren b) zeigten im Endotoxinrückhaltetest an Modulen mit 45 cm$^2$ freier Membranfläche und einer Filtrationsrate von 0,04 ml•min$^{-1}$•cm$^{-2}$ bei einer beaufschlagten Endotoxinkonzentration von 240 EU/ml (Lipopolysaccharide aus Ps. aeruginosa in isotoner NaCl-Lösung mit Zusatz von 1,5 mM CaCl$_2$ und 0,75 mM MgCl$_2$) im Filtrat nach 60 Minuten eine Endotoxinkonzentration von < 0,06 EU/ml, d.h. einen Wert unter der Nachweisgrenze des Gel-clot-LAL-Tests.
Die mit dem nicht erfindungsgemäßen Vinylpyrrolidon/3-Methyl-1-Vinylimidazoliniummethylsulfat-Copolymer Additiv behandelten Kapillaren c) zeigten im Endotoxinrückhaltetest an Modulen mit 5 cm$^2$ freier Membranfläche und einer Filtrationsrate von 0,03 ml•min$^{-1}$•cm$^{-2}$ bei einer beaufschlagten Endotoxinkonzentration von 240 EU/ml (Lipopolysaccharide aus Ps. aeruginosa in isotoner NaCl-Lösung mit Zusatz von 1,5 mM CaCl$_2$ und 0,75 mM MgCl$_2$) im Filtrat nach 60 Minuten eine Endotoxinkonzentration von 0,48 EU/ml, d.h. einen Wert deutlich oberhalb der Nachweisgrenze des Gel-clot-LAL-Tests.
Die unter den gleichen Bedingungen wie die Kapillaren c) getesteten Kapillaren a) ohne Additiv zeigten nach 60 Minuten ebenfalls eine Endotoxinkonzentration im Filtrat von 0,48 EU/ml.

**Patentansprüche**

1.   Hydrophil wirkender Formkörper zur Pyrogenrückhaltung umfassend eine synthetische Polymerkomponente und ein Additiv, **dadurch gekennzeichnet, dass** das Additiv ein keine Ladung tragendes Copolymer aus Vinylpyrrolidon und einer Vinylimidazol-Verbindung ist.

2.   Hydrophil wirkender Formkörper nach Anspruch 1, **dadurch gekennzeichnet, dass** er eine poröse Struktur aufweist.

3.   Hydrophil wirkender Formkörper nach Anspruch 2, **dadurch gekennzeichnet, dass** er als semipermeable Flach-, Schlauch- oder Hohlfasermembran ausgebildet ist.

4. Hydrophil wirkender Formkörper nach einem oder mehreren der Ansprüche 1 bis 3, **dadurch gekennzeichnet, dass** das Copolymer ein statistisches Copolymer ist.

5. Hydrophil wirkender Formkörper nach einem oder mehreren der Ansprüche 1 bis 4, **dadurch gekennzeichnet, dass** das molare Verhältnis von Vinylimidazol-Verbindung:Vinylpyrrolidon = 10:90 bis 90:10 mol/mol ist.

6. Hydrophil wirkender Formkörper nach Anspruch 5, **dadurch gekennzeichnet, dass** das molare Verhältnis von Vinylimidazol-Verbindung:Vinylpyrrolidon = 50:50 mol/mol ist.

7. Hydrophil wirkender Formkörper nach einem oder mehreren der Ansprüche 1 bis 6, **dadurch gekennzeichnet, dass** die Vinylimidazol-Verbindung an den Kohlenstoffatomen 2 und/oder 4 und/oder 5 mit einer $C_1$-$C_5$-Alkylgruppe substituiertes 1-Vinylimidazol ist.

8. Hydrophil wirkender Formkörper nach einem oder mehreren der Ansprüche 1 bis 6, **dadurch gekennzeichnet, dass** die Vinylimidazol-Verbindung 1-Vinylimidazol ist.

9. Hydrophil wirkender Formkörper nach einem oder mehreren der Ansprüche 1 bis 8, **dadurch gekennzeichnet, dass** das Additiv vernetzt ist.

10. Hydrophil wirkender Formkörper nach einem oder mehreren der Ansprüche 1 bis 9, **dadurch gekennzeichnet, dass** die synthetische Polymerkomponente ein hydrophiles Polymer ist.

11. Hydrophil wirkender Formkörper nach Anspruch 10, **dadurch gekennzeichnet, dass** das hydrophile Polymer Polyamid 6, Polyamid 6,6, Polyamid 4,6, Polyethylvinylalkohol oder sulfoniertes Polyethersulfon ist.

12. Hydrophil wirkender Formkörper nach einem oder mehreren der Ansprüche 1 bis 9, **dadurch gekennzeichnet, dass** die synthetische Polymerkomponente eine Mischung eines hydrophoben Polymers mit einer hydrophilen Modifikation dieses Polymers ist.

13. Hydrophil wirkender Formkörper nach einem oder mehreren der Ansprüche 1 bis 9, **dadurch gekennzeichnet, dass** die synthetische Polymerkomponente ein hydrophobes erstes Polymer und ein hydrophiles zweites Polymer umfasst.

14. Hydrophil wirkender Formkörper nach Anspruch 13, **dadurch gekennzeichnet, dass** das hydrophobe erste Polymer ausgewählt ist aus der Gruppe der Polysulfone, Polyethersulfone, Polyarylethersulfone, Polyacrylnitrile, Polycarbonate oder Polyolefine.

15. Hydrophil wirkender Formkörper nach Anspruch 13 oder 14, **dadurch gekennzeichnet, dass** das hydrophile zweite Polymer ausgewählt ist aus der Gruppe der Polyvinylpyrrolidone, Polyethylenglykole, Polyvinylalkohole oder der sulfonierten Polyethersulfone.

16. Verfahren zur Herstellung eines ein Additiv und eine synthetische Polymerkomponente umfassenden hydrophil wirkenden Formkörpers zur Pyrogenadsorption durch Herstellung einer eine synthetische Polymerkomponente umfassenden Lösung, Ausformen der Lösung, Unterwerfen der Lösung einer thermisch induzierten oder Nichtlöser induzierten Phasenseparation, wodurch der Formkörper erhalten wird, Waschen, anschließendes Trocknen des Formkörpers sowie gegebenenfalls Behandeln mit einem Benetzungsmittel, **dadurch gekennzeichnet, dass** als Additiv ein keine Ladung tragendes Copolymer aus Vinylpyrrolidon und einer Vinylimidazol-Verbindung ausgewählt wird und das Additiv entweder der die synthetische Polymerkomponente umfassenden Lösung zugesetzt wird oder bei der Herstellung des Formkörpers in einem der Ausformung der Lösung nachfolgenden Schritt zugesetzt wird.

17. Verfahren nach Anspruch 16, **dadurch gekennzeichnet, dass** als hydrophil wirkender Formkörper eine semipermeable Flach-, Schlauch- oder Hohlfasermembran mit poröser Struktur hergestellt wird.

18. Verfahren nach Anspruch 16 oder 17, **dadurch gekennzeichnet, dass** das Additiv der die synthetische Polymerkomponente umfassenden Lösung zugesetzt wird, wobei das Additiv in einem auf das Gewicht der Lösung bezogenen Anteil von 0,1 bis 10 Gew.% zugesetzt wird.

**19.** Verfahren nach Anspruch 16 oder 17, **dadurch gekennzeichnet, dass** das Additiv bei der Herstellung des Formkörpers in einem der Ausformung der Lösung nachfolgenden Schritt zugesetzt wird, wobei der Formkörper eine Hohlfaser-Membran ist und die die synthetische Polymerkomponente enthaltende Lösung über eine Hohlfaser-Düse zu einem Hohlfaden ausgeformt wird und über die Innenbohrung der Hohlfaserdüse eine Innenflüssigkeit zudosiert wird, die das Additiv enthält.

**20.** Verfahren nach Anspruch 19, **dadurch gekennzeichnet, dass** die Innenflüssigkeit das Additiv in einer Konzentration von 0,1 bis 5 Gew.% enthält.

**21.** Verfahren zur Herstellung eines eine synthetische Polymerkomponente und ein Additiv enthaltenden hydrophil wirkenden Formkörpers zur Pyrogenadsorption, **dadurch gekennzeichnet, dass** man einem Polymerkörper aus einer synthetischen Polymerkomponente als Additiv ein keine Ladung tragendes Copolymer aus Vinylpyrrolidon und einer Vinylimidazol-Verbindung zusetzt.

**22.** Verfahren nach Anspruch 21, **dadurch gekennzeichnet, dass** der Polymerkörper eine semipermeable Flach-, Schlauch- oder Hohlfasermembran mit poröser Struktur ist.

**23.** Verfahren nach Anspruche 21 oder 22, **dadurch gekennzeichnet, dass** man das Additiv in einem wässrigen Bad löst, den Polymerkörper durch das Bad führt und trocknet.

**24.** Verfahren nach Anspruch 23, **dadurch gekennzeichnet, dass** man das Additiv in einer Konzentration von 0,001 bis 2,0 Gew.% im Bad löst.

**25.** Verfahren nach Anspruch 24, **dadurch gekennzeichnet, dass** man das Additiv in einer Konzentration von 0,01 bis 1,0 Gew.% im Bad löst.

**26.** Verfahren nach einem oder mehreren der Ansprüche 16 bis 25, **dadurch gekennzeichnet, dass** als Copolymer ein statistisches Copolymer eingesetzt wird.

**27.** Verfahren nach einem oder mehreren der Ansprüche 16 bis 26, **dadurch gekennzeichnet, dass** ein Copolymer eingesetzt wird, dessen molares Verhältnis von Vinylimidazol-Verbindung:Vinylpyrrolidon = 10:90 bis 90:10 mol/mol ist.

**28.** Verfahren nach Anspruch 27, **dadurch gekennzeichnet, dass** ein Copolymer eingesetzt wird, dessen molares Verhältnis von Vinylimidazol-Verbindung:Vinylpyrrolidon = 50:50 mol/mol ist.

**29.** Verfahren nach einem oder mehreren der Ansprüche 16 bis 28, **dadurch gekennzeichnet, dass** als Vinylimidazol-Verbindung an den Kohlenstoffatomen 2 und/oder 4 und/oder 5 mit einer $C_1$-$C_5$-Alkylgruppe substituiertes 1-Vinylimidazol eingesetzt wird.

**30.** Verfahren nach einem oder mehreren der Ansprüche 16 bis 28, **dadurch gekennzeichnet, dass** als Vinylimidazol-Verbindung 1-Vinylimidazol eingesetzt wird.

**31.** Verfahren nach einem oder mehreren der Ansprüche 16 bis 30, **dadurch gekennzeichnet, dass** die synthetische Polymerkomponente ein hydrophiles Polymer ist.

**32.** Verfahren nach Anspruch 31, **dadurch gekennzeichnet, dass** das hydrophile Polymer Polyamid 6, Polyamid 6,6, Polyamid 4,6, Polyethylvinylalkohol oder sulfoniertes Polyethersulfon ist.

**33.** Verfahren nach einem oder mehreren der Ansprüche 16 bis 30, **dadurch gekennzeichnet, dass** die synthetische Polymerkomponente eine Mischung eines hydrophoben Polymers mit einer hydrophilen Modifikation dieses Polymers ist.

**34.** Verfahren nach einem oder mehreren der Ansprüche 16 bis 30, **dadurch gekennzeichnet, dass** als synthetische Polymerkomponente ein hydrophobes erstes Polymer und ein hydrophiles zweites Polymer ausgewählt wird.

**35.** Verfahren nach Anspruch 34, **dadurch gekennzeichnet, dass** als hydrophobes erstes Polymer ein Polymer aus der Gruppe der Polysulfone, Polyethersulfone, Polyarylethersulfone, Polyacrylnitrile, Polycarbonate oder Polyolefine, wie z.B. Polypropylen oder Polyethylen, ausgewählt wird.

**36.** Verfahren nach Anspruch 34 oder 35, **dadurch gekennzeichnet, dass** als hydrophiles zweites Polymer ein Polyvinylpyrrolidon, ein Polyethylenglykol, ein Polyvinylalkohol oder ein sulfoniertes Polyethersulfon ausgewählt wird.

**37.** Verfahren nach einem oder mehreren der Ansprüche 16 bis 36, **dadurch gekennzeichnet, dass** das Additiv vernetzt wird.

**38.** Verfahren nach einem oder mehreren der Ansprüche 16 bis 37, **dadurch gekennzeichnet, dass** das Additiv zusammen mit einem UV-Initiator zugesetzt und anschließend mit UV-Licht vernetzt wird.

**39.** Verfahren nach Anspruch 21, **dadurch gekennzeichnet, dass** das Additiv zusammen mit einem UV-Initiator in einem Bad vorgelegt wird, der Polymerkörper durch das Bad geführt und nach dem Verlassen des Bades der Bestrahlung mit einer UV-Lampe ausgesetzt wird.

**40.** Verwendung der Formkörper nach einem oder mehreren der Ansprüche 1 bis 39 zur Rückhaltung von Pyrogenen.

**41.** Verwendung der Formkörper nach Anspruch 39 zur Rückhaltung von Endotoxinen.

**Claims**

**1.** Hydrophilically acting shaped object for pyrogen retention, comprising a synthetic polymer component and an additive, **characterized in that** the additive is a copolymer bearing no electrical charge and made from vinylpyrrolidone and a vinylimidazole compound.

**2.** Hydrophilically acting shaped object according to Claim 1, **characterized in that** it has a porous structure.

**3.** Hydrophilically acting shaped object according to Claim 2, **characterized in that** it takes the form of a flat, tubular, or hollow-fiber membrane.

**4.** Hydrophilically acting shaped object according to one or more of Claims 1 to 3, **characterized in that** the copolymer is a statistic copolymer.

**5.** Hydrophilically acting shaped object according to one or more of Claims 1 to 4, **characterized in that** the molar ratio of the vinylimidazole compound to vinylpyrrolidone is from 10:90 to 90:10 mol/mol.

**6.** Hydrophilically acting shaped object according to Claim 5, **characterized in that** the molar ratio of the vinylimidazole compound to vinylpyrrolidone is 50:50 mol/mol.

**7.** Hydrophilically acting shaped object according to one or more of Claims 1 to 6, **characterized in that** the vinylimidazole compound is 1-vinylimidazole substituted at carbon atoms 2 and/or 4 and/or 5 with a $C_1$-$C_5$-alkyl group.

**8.** Hydrophilically acting shaped object according to one or more of Claims 1 to 6, **characterized in that** the vinylimidazole compound is 1-vinylimidazole.

**9.** Hydrophilically acting shaped object according to one or more of Claims 1 to 8, **characterized in that** the additive is cross-linked.

**10.** Hydrophilically acting shaped object according to one or more of Claims 1 to 9, **characterized in that** the synthetic polymer component is a hydrophilic polymer.

**11.** Hydrophilically acting shaped object according to Claim 10, **characterized in that** the hydrophilic polymer is polyamide 6, polyamide 6,6, polyamide 4,6, polyethylvinyl alcohol, or sulfonated polyethersulfone.

**12.** Hydrophilically acting shaped object according to one or more of Claims 1 to 9, **characterized in that** the synthetic polymer component is a mixture of a hydrophobic polymer with a hydrophilic modification of this polymer.

13. Hydrophilically acting shaped object according to one or more of Claims 1 to 9, **characterized in that** the synthetic polymer component comprises a hydrophobic first polymer and a hydrophilic second polymer.

14. Hydrophilically acting shaped object according to Claim 13, **characterized in that** the hydrophobic first polymer is selected from the group comprising polysulfones, polyethersulfones, polyarylethersulfones, polyacrylonitriles, polycarbonates, or polyolefins.

15. Hydrophilically acting shaped object according to Claim 13 or 14, **characterized in that** the hydrophilic second polymer is selected from the group comprising polyvinylpyrrolidones, polyethylene glycols, polyvinyl alcohols, or sulfonated polyethersulfones.

16. Process for manufacturing a hydrophilically acting shaped object for pyrogen adsorption comprising an additive and a synthetic polymer component, by preparing a solution comprising a synthetic polymer component, shaping the solution, subjecting the solution to phase separation that is thermally induced or induced by a non-solvent, resulting in the shaped object, washing, subsequent drying of the shaped object, and possibly treating with a wetting agent, the process **characterized in that** a copolymer bearing no electrical charge and made from vinylpyrrolidone and a vinylimidazole compound is selected as the additive and the additive is added either to the solution containing the synthetic polymer component or in a manufacturing step for the shaped object following the shaping of the solution.

17. Process according to Claim 16, **characterized in that** a semipermeable flat, tubular, or hollow-fiber membrane with porous structure is manufactured as the hydrophilically acting shaped object.

18. Process according to Claim 16 or 17, **characterized in that** the additive is added to the solution comprising the synthetic polymer component, whereby the additive is added in a concentration of 0.1 to 10% with respect to the weight of the solution.

19. Process according to Claim 16 or 17, **characterized in that** the additive is added during manufacture of the shaped object in a step following the shaping of the solution, whereby the shaped object is a hollow-fiber membrane and the solution containing the synthetic polymer component is shaped into a hollow fiber using a hollow-fiber nozzle and an interior liquid containing the additive is fed via the inner bore of the hollow-fiber nozzle.

20. Process according to Claim 19, **characterized in that** the interior liquid contains the additive in a concentration of 0.1 to 5% by weight.

21. Process for manufacturing a hydrophilically acting shaped object for pyrogen adsorption containing a synthetic polymer component and an additive, **characterized in that** a copolymer bearing no electrical charge and made from vinylpyrrolidone and a vinylimidazole compound is selected as the additive and added to a polymer object made from a synthetic polymer component.

22. Process according to Claim 21, **characterized in that** the polymer object is a semipermeable flat, tubular, or hollow-fiber membrane with porous structure.

23. Process according to Claim 21 or 22, **characterized in that** the additive is dissolved in an aqueous bath and the polymer object is guided through the batch and dried.

24. Process according to Claim 23, **characterized in that** the additive is dissolved in the bath in a concentration of 0.001 to 2.0% by weight.

25. Process according to Claim 24, **characterized in that** the additive is dissolved in the bath in a concentration of 0.01 to 1.0% by weight.

26. Process according to one or more of Claims 16 to 25, **characterized in that** the copolymer used is a statistic copolymer.

27. Process according to one or more of Claims 16 to 26, **characterized in that** a copolymer is used with a molar ratio of vinylimidazole compound to vinylpyrrolidone = 10:90 to 90:10 mol/mol.

**28.** Process according to Claim 27, **characterized in that** a copolymer is used with a molar ratio of vinylimidazole compound to vinylpyrrolidone = 50:50 mol/mol.

**29.** Process according to one or more of Claims 16 to 28, **characterized in that** the vinylimidazole compound is 1-vinylimidazole substituted at carbon atoms 2 and/or 4 and/or 5 with a $C_1$-$C_5$-alkyl group.

**30.** Process according to one or more of Claims 16 to 28, **characterized in that** 1-vinylimidazole is used as the vinylimidazole compound.

**31.** Process according to one or more of Claims 16 to 30, **characterized in that** the synthetic polymer component is a hydrophilic polymer.

**32.** Process according to Claim 31, **characterized in that** the hydrophilic polymer is polyamide 6, polyamide 6,6, polyamide 4,6, polyethylvinyl alcohol, or sulfonated polyethersulfone.

**33.** Process according to one or more of Claims 16 to 30, **characterized in that** the synthetic polymer component is a mixture of a hydrophobic polymer with a hydrophilic modification of this polymer.

**34.** Process according to one or more of Claims 16 to 30, **characterized in that** a hydrophobic first polymer and a hydrophilic second polymer are selected as the synthetic polymer component.

**35.** Process according to Claim 34, **characterized in that** the hydrophobic first polymer is a polymer selected from the group comprising polysulfones, polyethersulfones, polyarylethersulfones, polyacrylonitriles, polycarbonates, or polyolefins such as polypropylene or polyethylene.

**36.** Process according to Claims 34 or 35, **characterized in that** the hydrophilic second polymer is selected to be a polyvinylpyrrolidone, a polyethylene glycol, a polyvinyl alcohol, or a sulfonated polyethersulfone.

**37.** Process according to one or more of Claims 16 to 36, **characterized in that** the additive is cross-linked.

**38.** Process according to one or more of Claims 16 to 37, **characterized in that** the additive is added together with a UV initiator and then cross-linked using UV light.

**39.** Process according to Claim 21, **characterized in that** the additive is initially placed together with a UV initiator in a bath and the polymer object is guided through the bath and then subjected to irradiation by a UV lamp after leaving the bath.

**40.** Use of the shaped objects according to one or more of Claims 1 to 39 for pyrogen retention.

**41.** Use of the shaped objects according to Claim 39 for endotoxin retention.

**Revendications**

**1.** Article façonné à effet hydrophile pour rétention de pyrogènes, comprenant un composant polymère synthétique et un adjuvant, **caractérisé en ce que** cet adjuvant est un copolymère à base de vinyl-pyrrolidone et d'un composé de type vinyl-imidazole, qui ne porte aucune charge.

**2.** Article façonné à effet hydrophile, conforme à la revendication 1, **caractérisé en ce qu'**il présente une structure poreuse.

**3.** Article façonné à effet hydrophile, conforme à la revendication 2, **caractérisé en ce qu'**il se présente comme une membrane semi-perméable plane, tubulaire ou en fibres creuses.

**4.** Article façonné à effet hydrophile, conforme à l'une ou plusieurs des revendications 1 à 3, **caractérisé en ce que** ledit copolymère est un copolymère statistique.

**5.** Article façonné à effet hydrophile, conforme à l'une ou plusieurs des revendications 1 à 4, **caractérisé en ce que** le rapport molaire du composé de type vinyl-imidazole à la vinyl-pyrrolidone vaut de 10/90 à 90/10 mol/mol.

6. Article façonné à effet hydrophile, conforme à la revendication 5, **caractérisé en ce que** le rapport molaire du composé de type vinyl-imidazole à la vinyl-pyrrolidone vaut 50/50 mol/mol.

7. Article façonné à effet hydrophile, conforme à l'une ou plusieurs des revendications 1 à 6, **caractérisé en ce que** le composé de type vinylimidazole est un 1-vinyl-imidazole portant un ou des substituants alkyle en $C_{1-5}$ sur l'un ou plusieurs des atomes de carbone n° 2, 4 et 5.

8. Article façonné à effet hydrophile, conforme à l'une ou plusieurs des revendications 1 à 6, **caractérisé en ce que** le composé de type vinylimidazole est du 1-vinyl-imidazole.

9. Article façonné à effet hydrophile, conforme à l'une ou plusieurs des revendications 1 à 8, **caractérisé en ce que** l'adjuvant est réticulé.

10. Article façonné à effet hydrophile, conforme à l'une ou plusieurs des revendications 1 à 9, **caractérisé en ce que** le composant polymère synthétique est un polymère hydrophile.

11. Article façonné à effet hydrophile, conforme à la revendication 10, **caractérisé en ce que** le polymère hydrophile est du polyamide-6, du polyamide-6,6, du polyamide-4,6, un poly(alcool éthylique vinylique) ou un poly(éther sulfone) sulfoné.

12. Article façonné à effet hydrophile, conforme à l'une ou plusieurs des revendications 1 à 9, **caractérisé en ce que** le composant polymère synthétique est un mélange d'un polymère hydrophobe et d'un dérivé modifié hydrophile de ce polymère.

13. Article façonné à effet hydrophile, conforme à l'une ou plusieurs des revendications 1 à 9, **caractérisé en ce que** le composant polymère synthétique comprend un premier polymère hydrophobe et un deuxième polymère hydrophile.

14. Article façonné à effet hydrophile, conforme à la revendication 13, **caractérisé en ce que** le premier polymère hydrophobe est choisi dans l'ensemble formé par les polysulfones, poly(éther sulfone), poly(aryl éther sulfone), polyacrylonitrile, polycarbonates et polyoléfines.

15. Article façonné à effet hydrophile, conforme à la revendication 13 ou 14, **caractérisé en ce que** le deuxième polymère hydrophile est choisi dans l'ensemble formé par les poly(vinyl-pyrrolidone), polyéthylèneglycols, poly(alcool vinylique) et poly(éther sulfone) sulfonés.

16. Procédé de fabrication d'un article façonné à effet hydrophile pour adsorption de pyrogènes, comprenant un composant polymère synthétique et un adjuvant, dans lequel procédé on prépare une solution contenant un composant polymère synthétique, on met en forme cette solution et on la soumet à une séparation de phases induite par la chaleur ou par un non-solvant, grâce à quoi l'on obtient un article façonné qu'on lave et qu'on fait ensuite sécher, et qu'on traite éventuellement avec un agent de mouillage, procédé **caractérisé en ce que** l'on emploie comme adjuvant un copolymère à base de vinyl-pyrrolidone et d'un composé de type vinyl-imidazole, qui ne porte aucune charge, et **en ce que** l'on ajoute cet adjuvant, soit à la solution contenant le composant polymère synthétique, soit pendant la fabrication de l'article façonné, au cours d'une opération postérieure à la mise en forme de la solution.

17. Procédé conforme à la revendication 16, **caractérisé en ce qu'**on prépare, en tant qu'article façonné à effet hydrophile, une membrane semi-perméable plane, tubulaire ou en fibres creuses, dotée d'une structure poreuse.

18. Procédé conforme à la revendication 16 ou 17, **caractérisé en ce qu'**on ajoute l'adjuvant à la solution contenant le composant polymère synthétique, en une quantité représentant de 0,1 à 10 % du poids de cette solution.

19. Procédé conforme à la revendication 16 ou 17, **caractérisé en ce qu'**on ajoute l'adjuvant pendant la fabrication de l'article façonné, au cours d'une opération postérieure à la mise en forme de la solution, et dans lequel procédé ledit article façonné est une membrane en fibres creuses, on donne à la solution contenant le composant polymère synthétique la forme de fibres creuses en la faisant passer dans une filière à fibres creuses, et l'on introduit, par l'orifice interne de la filière à fibres creuses, un liquide interne qui contient l'adjuvant.

**20.** Procédé conforme à la revendication 19, **caractérisé en ce que** le liquide interne contient l'adjuvant en une concentration de 0,1 à 5 % en poids.

**21.** Procédé de fabrication d'un article façonné à effet hydrophile pour adsorption de pyrogènes, comprenant un composant polymère synthétique et un adjuvant, **caractérisé en ce qu'**on ajoute à un article en polymère fait d'un composant polymère synthétique, en tant qu'adjuvant, un copolymère à base de vinyl-pyrrolidone et d'un composé de type vinyl-imidazole, qui ne porte aucune charge.

**22.** Procédé conforme à la revendication 21, **caractérisé en ce que** l'article en polymère est une membrane semi-perméable plane, tubulaire ou en fibres creuses, dotée d'une structure poreuse.

**23.** Procédé conforme à la revendication 21 ou 22, **caractérisé en ce qu'**on dissout l'adjuvant dans un bain aqueux, puis on fait passer l'article en polymère dans ce bain et on le fait sécher.

**24.** Procédé conforme à la revendication 23, **caractérisé en ce que** l'on dissout l'adjuvant dans le bain en une concentration de 0,001 à 2,0 % en poids.

**25.** Procédé conforme à la revendication 24, **caractérisé en ce que** l'on dissout l'adjuvant dans le bain en une concentration de 0,01 à 1,0 % en poids.

**26.** Procédé conforme à l'une ou plusieurs des revendications 16 à 25, **caractérisé en ce que** le copolymère employé est un copolymère statistique.

**27.** Procédé conforme à l'une ou plusieurs des revendications 16 à 26, **caractérisé en ce que** l'on emploie un copolymère chez lequel le rapport molaire du composé de type vinyl-imidazole à la vinyl-pyrrolidone vaut de 10/90 à 90/10 mol/mol.

**28.** Procédé conforme à la revendication 27, **caractérisé en ce que** le rapport molaire du composé de type vinyl-imidazole à la vinyl-pyrrolido-ne vaut 50/50 mol/mol.

**29.** Procédé conforme à l'une ou plusieurs des revendications 16 à 28, **caractérisé en ce que** le composé de type vinyl-imidazole est un 1-vinylimidazole portant un ou des substituants alkyle en $C_{1-5}$ sur l'un ou plusieurs des atomes de carbone n° 2, 4 et 5.

**30.** Procédé conforme à l'une ou plusieurs des revendications 16 à 28, **caractérisé en ce que** le composé de type vinyl-imidazole est du 1-vinylimidazole.

**31.** Procédé conforme à l'une ou plusieurs des revendications 16 à 30, **caractérisé en ce que** le composant polymère synthétique est un polymère hydrophile.

**32.** Procédé conforme à la revendication 31, **caractérisé en ce que** le polymère hydrophile est du polyamide-6, du polyamide-6,6, du poly-amide-4,6, un poly(alcool éthylique vinylique) ou un poly(éther sulfone) sulfoné.

**33.** Procédé conforme à l'une ou plusieurs des revendications 16 à 30, **caractérisé en ce que** le composant polymère synthétique est un mélange d'un polymère hydrophobe et d'un dérivé modifié hydrophile de ce polymère.

**34.** Procédé conforme à l'une ou plusieurs des revendications 16 à 30, **caractérisé en ce que** l'on choisit d'associer, en tant que composant polymère synthétique, un premier polymère hydrophobe et un deuxième polymère hydrophile.

**35.** Procédé conforme à la revendication 34, **caractérisé en ce que** l'on choisit, en tant que premier polymère hydrophobe, un polymère de l'ensemble formé par les polysulfones, poly(éther sulfone), poly(aryl éther sulfone), polyacrylonitrile, polycarbonates et polyoléfines, comme par exemple un polypropylène ou un polyéthylène.

**36.** Procédé conforme à la revendication 34 ou 35, **caractérisé en ce que** l'on choisit, en tant que deuxième polymère hydrophile, une poly(vinyl-pyrrolidone), un polyéthylèneglycol, un poly(alcool vinylique) ou un poly(éther sulfone) sulfoné.

**37.** Procédé conforme à l'une ou plusieurs des revendications 16 à 36, **caractérisé en ce que** l'adjuvant est réticulé.

**38.** Procédé conforme à l'une ou plusieurs des revendications 16 à 37, **caractérisé en ce que** l'on ajoute un photoamorceur UV avec l'adjuvant, puis on fait réticuler celui-ci au moyen d'un rayonnement ultraviolet.

**39.** Procédé conforme à la revendication 21, **caractérisé en ce que** l'on met au préalable l'adjuvant dans un bain, avec un photoamorceur UV, on fait passer l'article en polymère dans le bain, et on l'irradie avec une lampe à rayonnement ultraviolet après qu'il a quitté le bain.

**40.** Emploi d'un article façonné conforme à l'une ou plusieurs des revendications 1 à 39, pour la rétention de pyrogènes.

**41.** Emploi d'un article façonné conforme à la revendication 39, pour la rétention d'endotoxines.